# EUROPEAN PATENT APPLICATION

(11) **EP 1 374 989 A2**
(43) Date of publication of application: **02.01.2004**
(21) Application number: 03253934.8
(22) Date of filing: 20.06.2003
(51) Int. Cl.: B01J 19/00, B01L 3/00

(54) **Array assay devices and methods of using the same**

(30) Priority: 21.06.2002 US 179938
(71) Applicant: Agilent Technologies, Inc., Palo Alto, CA 94306 (US)
(72) Inventor: Shea, Laurence R., Charlotte, NC 28277 (US); Summers, Douglas G., Sunnyvale, CA 94086 (US); Hilson, Richard O., Sunnyvale, CA 94087 (US); Schembri, Carol T., San Mateo, CA 94403 (US)
(74) Representative: Jehan, Robert

(57) **Abstract**

Array assay devices and methods for using the same in array based assays are provided. The subject devices are characterized by having a bottom surface **(32)**, a substrate receiving element **(1)** and a compression element **(72)** for holding the bottom surface **(32)** in a fixed position relative to a substrate **(110)** received by the receiving element **(1)**. The subject invention also includes methods for performing an array assay. In the subject methods, a subject device **(10)** is provided and a substrate **(110)** having at least one array **(112)** is placed in the receiving element **(1)**. The bottom surface **(32)** of the device **(10)** is compressed by the compression element **(72)** so as to fix its position relative to the substrate **(110)** and a sample is contacted to the at least one array **(112).** The subject invention also includes kits which include the subject devices.

## Description

The present invention relates to assay array devices and to methods of performing array assays.

Array assays between surface bound binding agents or probes and target molecules in solution may be used to detect the presence of particular biopolymers. The surface-bound probes may be oligonucleotides, polynucleotides, peptides, polypeptides, proteins, antibodies or other molecules capable of binding with target molecules in solution. Such binding interactions are the basis for many of the methods and devices used in a variety of different fields, e.g., genomics (in sequencing by hybridization, SNP detection, differential gene expression analysis, identification of novel genes, gene mapping, finger printing, etc.) and proteomics.

One typical array assay method involves biopolymeric probes immobilized in an array on a substrate such as a glass substrate or the like. A solution containing analytes that bind with the attached probes is placed in contact with the substrate, covered with another substrate to form an assay area and placed in an environmentally controlled chamber such as an incubator or the like. Usually, the targets in the solution bind to the complementary probes on the substrate to form a binding complex. The pattern of binding by target molecules to biopolymer probe features or spots on the substrate produces a pattern on the surface of the substrate and provides desired information about the sample. In most instances, the target molecules are labeled with a detectable tag such as a fluorescent tag, chemiluminescent tag or radioactive tag. The resultant binding interaction or complexes of binding pairs are then detected and read or interrogated, for example by optical means, although other methods may also be used. For example, laser light may be used to excite fluorescent tags, generating a signal in those spots on the biochip that have a target molecule and thus a fluorescent tag bound to a probe molecule. This pattern may then be digitally scanned for computer analysis.

As will be apparent, control of the assay environment and conditions contributes to increased reliability and reproducibility of the array assays. However, merely placing a slide over the substrate or positioning a cover slip over the substrate, as is commonly done, is often insufficient to allow precise control over the assay and is labor intensive as well.

During an array assay such as a hybridization assay, the assay is often performed at elevated temperatures and care must be taken so that the array does not dry out. Using a second slide positioned over the substrate allows contents to leak and/or evaporate which can result in the array drying out during use, adversely impacting the assay. In addition, the substrate cannot be tipped or moved from the horizontal position without risk that the substrate or cover slip will slip off. Maintaining the array in a humid environment may reduce drying-out, but offers only an incomplete solution.

Various chambers or containers have been developed to eliminate the use of a substrate or cover slip and facilitate the above described array assays. However, while many of these chambers are effective, they often require the user to manually assemble the apparatus around an array using screws to maintain the structure together. Such procedures take time and may introduce contaminants into the array due to the increased handling thereof during assembly of the apparatus.

The present invention seeks to provide improved array assays.

According to an aspect of the present invention, there is provided an array assay device as specified in claim 1.

According to another aspect of the present invention, there is provided a method of performing an array assay as specified in claim 6, 9 or 10.

The preferred embodiments can provide an array assay device, and methods of use thereof, that does not require assembly, is easy to use, includes a minimum of components, prevents drying out of the array and that may also be capable of testing multiple samples with multiple arrays without cross-contamination.

In the preferred embodiments, the subject devices are provided with a substrate receiving element for positioning a substrate having at least one array in the array assay device, the substrate receiving element having a bottom surface, and a compression element for urging the bottom surface in a direction towards a substrate when present in the substrate receiving element so as to hold the bottom surface in a fixed position relative to the substrate present in the receiving element. In certain embodiments, the bottom surface includes a sealing element which forms a seal around at least one array positioned on a substrate present in the receiving element when the bottom surface is in the fixed position. Oftentimes, the substrate includes a plurality of arrays and the sealing element forms individual seals or assay areas around each array so that multiple samples may be tested with multiple arrays without cross-contamination. The preferred embodiments also provide methods for performing an array assay. In the subject methods, a subject device is provided and a substrate having at least one array is positioned in the receiving element, the bottom surface of the device is urged by the compression element, whereby the bottom surface is held in a fixed position relative to the substrate present in the receiving element to provide an array assay area between the bottom surface and the substrate, and a sample is contacted to the at least one array. They also provide for kits for use in practising the subject methods.

Embodiments of the present invention are described below, by way of example only, with reference to the accompanying drawings in which:
Figure 1 shows an exemplary substrate carrying an array, such as may be used in the devices of the subject invention.
Figure 2 shows an enlarged view of a portion of Figure 1 showing spots or features.
Figure 3 is an enlarged view of a portion of the substrate of Figure 2.
Figure 4 shows a front view of an exemplary embodiment of an array assay device of the present invention.
Figure 5 shows a cross section of the device of Figure 4 through line x-x.
Figures 6A-6C show the bottom surface of the device of Figure 4 having different configurations of the sealing element.
Figure 7 shows an exemplary embodiment of an array holder according to the subject invention.
Figure 8 shows the array holder of Figure 7 having reduced length substrates with at least one array thereon inserted therein.
Figure 9 is an exploded view of the array assay device of Figure 4.
Figures 10 and 11 are more detailed views of some of the components shown in Figure 9.
Figure 12 shows the device of Figure 4 having a substrate partially mounted therein.
Figure 13 shows the substrate of Figure 12 mounted in the device of Figure 12.
Figure 14 shows a cross section of the device of Figure 12 with mounted substrate through line y-y.

### DEFINITIONS

The term "polymer" refers to any compound that is made up of two or more monomeric units covalently bonded to each other, where the monomeric units may be the same or different, such that the polymer may be a homopolymer or a heteropolymer. Representative polymers include peptides, polysaccharides, nucleic acids and the like, where the polymers may be naturally occurring or synthetic.

The term "monomer" as used herein refers to a chemical entity that can be covalently linked to one or more other such entities to form an oligomer. Examples of "monomers" include nucleotides, amino acids, saccharides, peptides, and the like. In general, the monomers used in conjunction with the present invention have first and second sites (e.g., C-termini and N-termini, or 5' and 3' sites) suitable for binding to other like monomers by means of standard chemical reactions (e.g., condensation, nucleophilic displacement of a leaving group, or the like), and a diverse element which distinguishes a particular monomer from a different monomer of the same type (e.g., an amino acid side chain, a nucleotide base, etc.). The initial substrate-bound monomer is generally used as a building-block in a multi-step synthesis procedure to form a complete ligand, such as in the synthesis of oligonucleotides, oligopeptides, and the like.

The term "oligomer" is used herein to indicate a chemical entity that contains a plurality of monomers. As used herein, the terms "oligomer" and "polymer" are used interchangeably. Examples of oligomers and polymers include polydeoxyribonucleotides, polyribonucleotides, other polynucleotides which are B or C-glycosides of a purine or pyrimidine base, polypeptides, polysaccharides, and other chemical entities that contain repeating units of like chemical structure.

The term "ligand" as used herein refers to a moiety that is capable of covalently or otherwise chemically binding a compound of interest. The ligand may be a portion of the compound of interest. The term "ligand" in the context of the invention may or may not be an "oligomer" as defined above. The term "ligand" as used herein may also refer to a compound that is synthesized on the substrate surface as well as a compound is "pre-synthesized" or obtained commercially, and then attached to the substrate surface.

The terms "array" "biopolymeric array" and "biomolecular array" are used herein interchangeably to refer to an arrangement of ligands or molecules of interest on a substrate surface which can be used for analyte detection, combinatorial chemistry, or other applications wherein a two-dimensional arrangement of molecules of interest can be used. That is, the terms refer to an ordered pattern of probe molecules adherent to a substrate, i.e., wherein a plurality of molecular probes are bound to a substrate surface and arranged in a spatially defined and physically addressable manner. Such arrays may be comprised of oligonucleotides, peptides, polypeptides, proteins, antibodies, or other molecules used to detect sample molecules in a sample fluid.

The term "biomolecule" means any organic or biochemical molecule, group or species of interest which may be formed in an array on a substrate surface. Exemplary biomolecules include peptides, proteins, amino acids and nucleic acids.

The term "peptide" as used herein refers to any compound produced by amide formation between a carboxyl group of one amino acid and an amino group of another group.

The term "oligopeptide" as used herein refers to peptides with fewer than about 10 to 20 residues, *i.e.* amino acid monomeric units.

The term "polypeptide" as used herein refers to peptides with more than 10 to 20 residues.

The term "protein" as used herein refers to polypeptides of specific sequence of more than about 50 residues.

The term "nucleic acid" as used herein means a polymer composed of nucleotides, e.g. deoxyribonucleotides or ribonucleotides, or compounds produced synthetically (e.g. PNA as described in U.S. Patent No. 5,948,902 and the references cited therein) which can hybridize with naturally occurring nucleic acids in a sequence specific manner analogous to that of two naturally occurring nucleic acids, e.g., can participate in Watson-Crick base pairing interactions.

The terms "ribonucleic acid" and "RNA"s used herein mean a polymer composed of ribonucleotides.

The terms "deoxyribonucleic acid" and "DNA" as used herein mean a polymer composed of deoxyribonucleotides.

The term "oligonucleotide" as used herein denotes single stranded nucleotide multimers of from about 10 to 100 nucleotides and up to 200 nucleotides in length.

The term "polynucleotide" as used herein refers to single or double stranded polymer composed of nucleotide monomers of generally greater than 100 nucleotides in length.

The term "sample" as used herein relates to a material or mixture of materials, typically, although not necessarily, in fluid form, containing one or more components of interest.

The terms "nucleoside" and "nucleotide" are intended to include those moieties which contain not only the known purine and pyrimidine bases, but also other heterocyclic bases that have been modified. Such modifications include methylated purines or pyrimidines, acylated purines or pyrimidines, or other heterocycles. In addition, the terms "nucleoside" and "nucleotide" include those moieties that contain not only conventional ribose and deoxyribose sugars, but other sugars as well. Modified nucleosides or nucleotides also include modifications on the sugar moiety, e.g., wherein one or more of the hydroxyl groups are replaced with halogen atoms or aliphatic groups, or are functionalized as ethers, amines, or the like.

The term "chemically inert" is used herein to mean substantially chemically unchanged by contact with reagents and conditions normally involved in array based assays such as hybridization assays or any other related reactions or assays, e.g., proteomic array applications.

The term "communicating" information refers to transmitting data representing that information as electrical signals over a suitable communication channel (for example, a private or public network).

The term "forwarding" an item refers to any means of getting that item from one location to the next, whether by physically transporting that item or otherwise (where that is possible) and includes, at least in the case of data, physically transporting a medium carrying the data or communicating the data.

The term "physically inert" is used herein to mean substantially unchanged physically by contact with reagents and conditions normally involved in array based assays such as hybridization reactions or any other related reactions or assays.

The terms "target" "target molecule" and "analyte" are used herein interchangeably and refer to a known or unknown molecule in a sample, which will hybridize to a molecular probe on a substrate surface if the target molecule and the molecular probe contain complementary regions, i.e., if they are members of a specific binding pair. In general, the target molecule is a biopolymer, i.e., an oligomer or polymer such as an oligonucleotide, a peptide, a polypeptide, a protein, and antibody, or the like.

The term "hybridization" as used herein refers to binding between complementary or partially complementary molecules, for example as between the sense and anti-sense strands of double-stranded DNA. Such binding is commonly non-covalent binding, and is specific enough that such binding may be used to differentiate between highly complementary molecules and others less complementary. Examples of highly complementary molecules include complementary oligonucleotides, DNA, RNA, and the like, which comprise a region of nucleotides arranged in the nucleotide sequence that is exactly complementary to a probe; examples of less complementary oligonucleotides include ones with nucleotide sequences comprising one or more nucleotides not in the sequence exactly complementary to a probe oligonucleotide.

The term "hybridization solution" or "hybridization reagent" used herein interchangeably refers to a solution suitable for use in a hybridization reaction.

The terms "mix" and "mixing" as used herein means to cause fluids to flow within a volume so as to more uniformly distribute solution components, as after different solutions are combined or after a solution is newly introduced into a volume or after a component of the solution is locally depleted.

The term "probe" as used herein refers to a molecule of known identity adherent to a substrate.

The term "remote location" refers to a location other than the location at which the array is present and hybridization occur. As such, when one item is indicated as being "remote" from another, what is meant is that the two items are at least in different buildings, and may be at least one mile, ten miles, or at least one hundred miles apart.

The term "sealing element" is used herein to refer to any sealing device or structure that produces a seal between two surfaces, such as a gasket, a lip, ledge or ridge, material interface, viscous sealant, or the like.

The term "substantially vapor and fluid tight seal" means a seal that is produced by a sealing element that prevents substantial evaporation of fluidic contents in an assay area bounded by the sealing element.

The term "substrate" as used herein refers to a surface upon which marker molecules or probes, e.g., an array, may be adhered. Glass slides are the most common substrate for biochips, although fused silica, silicon, plastic and other materials are also suitable.

The term "surfactant" is used herein in its conventional sense to refer to a compound effective to reduce surface tension in a fluid and improve wetting of surfaces. Suitable surfactants herein include anionic, cationic, amphoteric and nonionic surfactants, with anionic surfactants and polymeric nonionic surfactants being preferred in certain embodiments.

The term "thermally stable" is used herein to mean substantially unchanged, i.e., does not degrade or otherwise chemically react at temperatures used for array based assays.

The term "stringent hybridization conditions" as used herein refers to conditions that are that are compatible to produce duplexes on an array surface between complementary binding members, i.e., between probes and complementary targets in a sample, e.g., duplexes of nucleic acid probes, such as DNA probes, and their corresponding nucleic acid targets that are present in the sample, e.g., their corresponding mRNA analytes present in the sample. An example of stringent hybridization conditions is hybridization at 50°C or higher and 0.1 xSSC (15 mM sodium chloride/1.5 mM sodium citrate). Another example of stringent hybridization conditions is overnight incubation at 42°C in a solution: 50% formamide, 5 x SSC (150 mM NaCl, 15 mM trisodium citrate), 50 mM sodium phosphate (pH7.6), 5 x Denhardt's solution, 10% dextran sulfate, followed by washing the filters in 0.1 x SSC at about 65°C. Stringent hybridization conditions are hybridization conditions that are at least as stringent as the above representative conditions. Other stringent hybridization conditions are known in the art and may also be employed to identify nucleic acids of this particular embodiment of the invention.

Array assay devices and methods for using the same in array based assays are provided. The preferred devices are characterized by having a substrate receiving element for positioning a substrate having at least one array in the array assay device, the substrate receiving element having a bottom surface, and a compression element for urging the bottom surface in a direction towards a substrate when present in the substrate receiving element so as to hold the bottom surface in a fixed position relative to the substrate present in the receiving element. In certain embodiments, the bottom surface includes a sealing element which forms a seal around at least one array positioned on a substrate present in the receiving element when the bottom surface is in the fixed position. Oftentimes, the substrate includes a plurality of arrays and the sealing element forms individual seals or assay areas around each array so that multiple samples may be tested with multiple arrays without cross-contamination. The subject invention also includes methods for performing an array assay. In the preferred methods, a subject device is provided and a substrate having at least one array is positioned in the receiving element, the bottom surface of the device is urged by the compression element, whereby the bottom surface is held in a fixed position relative to the substrate present in the receiving element to provide an array assay area between the bottom surface and the substrate, and a sample is contacted to the at least one array. The subject invention also includes kits for use in practicing the subject methods.

Before the preferred embodiments are described, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the claims. The upper and lower limits of these smaller ranges may independently be included in the smaller ranges is also encompassed within the claims, subject to any specifically excluded limit in the stated range. Where the stated range includes one or both of the limits, ranges excluding either both of those included limits are also included in the claims.

It must be noted that as used herein and in the appended claims, the singular forms "a", "an", and "the" include plural referents unless the context clearly dictates otherwise. Thus, for example, reference to "a port" includes a plurality of such ports and reference to "the array" includes reference to one or more arrays and equivalents thereof known to those skilled in the art, and so forth.

The teachings herein can be used with a number of different types of arrays in which a plurality of distinct polymeric binding agents are stably associated with at least one surface of a substrate or solid support. The polymeric binding agents may vary widely, however polymeric binding agents of particular interest include peptides, proteins, nucleic acids, polysaccharides, synthetic mimetics of such biopolymeric binding agents, etc. In many embodiments of interest, the biopolymeric arrays are arrays of nucleic acids, including oligonucleotides, polynucleotides, cDNAs, mRNAs, synthetic mimetics thereof, and the like.

While the subject devices find use in array hybridization assays, the subject devices also find use in any suitable binding assay in which members of a specific binding pair interact. That is, any of a number of different binding assays may be performed with the subject devices, where typically a first member of a binding pair is stably associated with the surface of a substrate and a second member of a binding pair is free in a sample, where the binding members may be: ligands and receptors, antibodies and antigens, complementary nucleic acids, and the like. For ease of description only, the subject devices and methods described below will be described primarily in reference to hybridization assays by way of example only, where such examples are not intended to limit the scope of the claims. It will be appreciated by those of skill in the art that the subject devices and methods may be employed for use with other binding assays as well, such as immunoassays, proteomic assays, etc.

Representative arrays used in the preferred embodiments will be described first to provide a proper foundation for the subject invention. Next, devices employed in the subject invention are described in greater detail, followed by a detailed description of the subject methods and kits which include the subject devices.

### Representative Biopolymeric Arrays

As mentioned above, the devices of the preferred embodiments are used with arrays and more specifically biopolymeric arrays. Such biopolymeric arrays find use in a variety of applications, including gene expression analysis, drug screening, nucleic acid sequencing, mutation analysis, and the like. These biopolymeric arrays include a plurality of ligands or molecules or probes (i.e., binding agents or members of a binding pair) deposited onto the surface of a substrate in the form of an "array" or pattern.

The biopolymeric arrays include at least two distinct polymers that differ by monomeric sequence attached to different and known locations on the substrate surface. Each distinct polymeric sequence of the array is typically present as a composition of multiple copies of the polymer on a substrate surface, e.g., as a spot or feature on the surface of the substrate. The number of distinct polymeric sequences, and hence spots or similar structures, present on the array may vary, where a typical array may contain more than about ten, more than about one hundred, more than about one thousand, more than about ten thousand or even more than about one hundred thousand features in an area of less than about 20 cm² or even less than about 10 cm². For example, features may have widths (that is, diameter, for a round spot) in the range from about 10 µm to about 1.0 cm. In other embodiments, each feature may have a width in the range from about 1.0 µm to about 1.0 mm, usually from about 5.0 µm to about 500 µm and more usually from about 10 µm to about 200 µm. Non-round features may have area ranges equivalent to that of circular features with the foregoing width (diameter) ranges. At least some, or all, of the features are of different compositions (for example, when any repeats of each feature composition are excluded, the remaining features may account for at least about 5%, 10% or 20% of the total number of features). Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents, but may not be present when, for example, photolithographic array fabrication process are used. It will be appreciated though, that the interfeature areas, when present, could be of various sizes and configurations. The spots or features of distinct polymers present on the array surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like.

In the broadest sense, the arrays are arrays of polymeric or biopolymeric ligands or molecules, i.e., binding agents, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like.

The arrays may be produced using any convenient protocol. Various methods for forming arrays from pre-formed probes, or methods for generating the array using synthesis techniques to produce the probes *in situ,* are generally known in the art. See, for example, Southern, U.S. Patent No. 5,700,637; Pirrung, et al., U.S. Patent No. 5,143,854 and Fodor, et al. (1991) *Science* 251:767-777, and PCT International Publication No. WO 92/10092. For example, probes can either be synthesized directly on the solid support or substrate to be used in the array assay or attached to the substrate after they are made. Arrays may be fabricated using drop deposition from pulse jets of either polynucleotide precursor units (such as monomers) in the case of *in situ* fabrication, or the previously obtained polynucleotide. Such methods are described in detail in, for example, the previously cited references including U.S. Patent Nos: 6,242,266, 6,232,072, 6,180,351, 6,171,797, and 6,323,043; and U.S. Patent Application Serial No. 09/302,898 filed April 30, 1999 by Caren et al., and the references cited therein.

Other drop deposition methods may be used for fabrication. Also, instead of drop deposition methods, photolithographic array fabrication methods may be used such as described in U.S. Patent Nos. 5,599,695, 5,753,788, and 6,329,143.

As mentioned above, interfeature areas need not be present, particularly when the arrays are made by photolithographic methods as described in those patents.

A variety of solid supports or substrates may be used, upon which an array may be positioned. In certain embodiments, a plurality of arrays may be stably associated with one substrate. For example, a plurality of arrays may be stably associated with one substrate, where the arrays are spatially separated from some or all of the other arrays associated with the substrate.

The substrate may be selected from a wide variety of materials including, but not limited to, natural polymeric materials, particularly cellulosic materials and materials derived from cellulose, such as fiber containing papers, e.g., filter paper, chromatographic paper, etc., synthetic or modified naturally occurring polymers, such as nitrocellulose, cellulose acetate, poly (vinyl chloride), polyamides, polyacrylamide, polyacrylate, polymethacrylate, polyesters, polyolefins; polyethylene, polytetrafluoro-ethylene, polypropylene, poly (4-methylbutene), polystyrene, poly(ethylene terephthalate), nylon, poly(vinyl butyrate), cross linked dextran, agarose, etc.; either used by themselves or in conjunction with other materials; fused silica (e.g., glass), bioglass, silicon chips, ceramics, metals, and the like. For example, substrates may include polystyrene, to which short oligophosphodiesters, e.g., oligonucleotides ranging from about 5 to about 50 nucleotides in length, may readily be covalently attached (Letsinger et al. (1975) *Nucl. Acids Res.* 2:773-786), as well as polyacrylamide (Gait et al. (1982) *Nucl. Acids Res.* 10:6243-6254), silica (Caruthers et al. (1980) *Tetrahedron Letters* 21:719-722), and controlled-pore glass (Sproat et al. (1983) *Tetrahedron Letters* 24:5771-5774). Additionally, the substrate can be hydrophilic or capable of being rendered hydrophilic.

Suitable substrates may exist, for example, as sheets, tubing, spheres, containers, pads, slices, films, plates, slides, strips, disks, etc. The substrate is usually flat, but may take on alternative surface configurations. The substrate can be a flat glass substrate, such as a conventional microscope glass slide, a cover slip and the like. Common substrates used for the arrays of probes are surface-derivatized glass or silica, or polymer membrane surfaces, as described in Maskos, U. et al., *Nucleic Acids Res,* 1992, 20:1679-84 and Southern, E. M. et al., *Nucleic acids Res,* 1994, 22:1368-73.

Each array may cover an area of less than about 100 cm², or even less than about 50 cm², 10 cm² or 1 cm². In many embodiments, the substrate carrying the one or more arrays will be shaped generally as a rectangular solid (although other shapes are possible), having a length of more than about 4 mm and less than about 1 m, usually more than about 4 mm and less than about 600 mm, more usually less than about 400 mm; a width of more than about 4 mm and less than about 1 m, usually less than about 500 mm and more usually less than about 400 mm; and a thickness of more than about 0.01 mm and less than about 5.0 mm, usually more than about 0.1 mm and less than about 2 mm and more usually more than about 0.2 and less than about 1 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, the substrate may transmit at least about 20%, or about 50% (or even at least about 70%, 90%, or 95%), of the illuminating light incident on the substrate as may be measured across the entire integrated spectrum of such illuminating light or alternatively at 532 nm or 633 nm.

Immobilization of the probe to a suitable substrate may be performed using conventional techniques. See, e.g., Letsinger et al. (1975) *Nucl. Acids Res.* 2:773-786; Pease, A.C. et al., *Proc. Nat. Acad. Sci. USA,* 1994, 91:5022-5026, and "Oligonucleotide Synthesis, a Practical Approach," Gait, M.J. (ed.), Oxford, England: IRL Press (1984). The surface of a substrate may be treated with an organosilane coupling agent to functionalize the surface. See, e.g., Arkins, "Silane Coupling Agent Chemistry, *" Petrarch Systems Register and Review,* Eds. Anderson et al. (1987) and U.S. Patent No. 6,258,454.

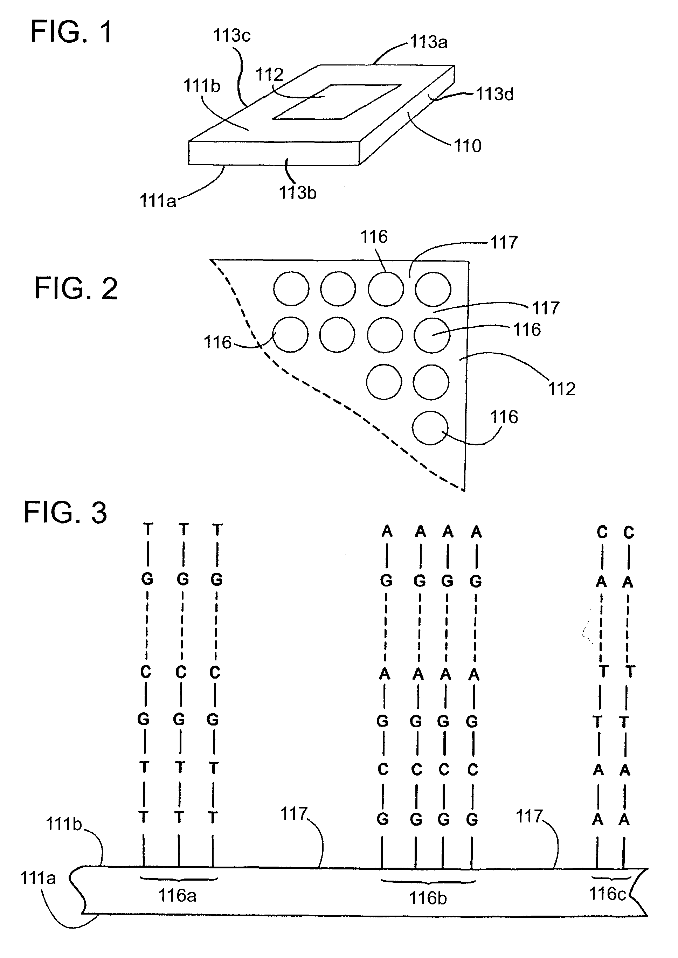

Referring first to Figures 1-3, typically biopolymeric arrays of the preferred embodiments use a contiguous planar substrate 110 carrying an array 112 disposed on a rear surface 111b of substrate 110. It will be appreciated though, that more than one array (any of which are the same or different) may be present on rear surface 111b, with or without spacing between such arrays. That is, any given substrate may carry one, two, four or more arrays disposed on a front surface of the substrate and depending on the use of the array, any or all of the arrays may be the same or different from one another and each may contain multiple spots or features. The one or more arrays 112 usually cover only a portion of the rear surface 111b, with regions of the rear surface 111b adjacent the opposed sides 113c, 113d and leading end 113a and trailing end 113b of slide 110, not being covered by any array 112. A front surface 111 a of the slide 110 does not carry any arrays 112. Each array 112 can be designed for testing against any type of sample, whether a trial sample, reference sample, a combination of them, or a known mixture of biopolymers such as polynucleotides. Substrate 110 may be of any shape, as mentioned above.

As mentioned above, array 112 contains multiple spots or features 116 of biopolymers, e.g., in the form of polynucleotides. As mentioned above, all of the features 116 may be different, or some or all could be the same. The interfeature areas 117, if present, could be of various sizes and configurations. Each feature carries a predetermined biopolymer such as a predetermined polynucleotide (which includes the possibility of mixtures of polynucleotides). It will be understood that there may be a linker molecule (not shown) of any known types between the rear surface 111b and the first nucleotide.

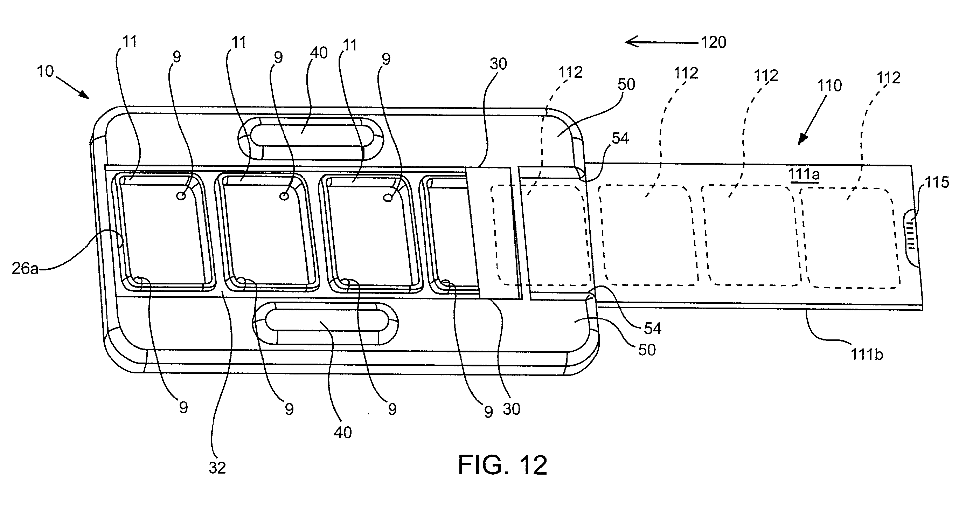

Substrate 110 may carry on front surface 111a, an identification code, e.g., in the form of bar code or the like, printed on a substrate in the form of a paper label attached by adhesive or any convenient means (see Figure 12 which shows bar code 115 associated with substrate 110). The identification code contains information relating to array 112, where such information may include, but is not limited to, an identification of array 112, i.e., layout information relating to the array(s), etc.

### Array Assay Devices

As summarized above, the array assay devices of the preferred embodiments are used with a substrate having at least one array thereon to perform an array assay procedure. Generally, the subject array assay devices include a substrate receiving element having a bottom surface and a compression element that urges the bottom surface in a direction towards a substrate when present in the receiving element to hold the bottom surface in a fixed position relative to the substrate. The preferred arrangement, e.g., the bottom surface of the subject array assay devices, the array substrate, etc., may also includes a sealing element which provides a seal around an array on a substrate when the bottom surface is in a fixed position due to the compression forces exerted thereupon by the compression element. That is, when the bottom surface is in a fixed position relative to a substrate having at least one array mounted in the receiving element of the device, the at least one array is bounded or surrounded by the sealing element which provides a seal or a sealed assay area around the at least one array, e.g., a substantially vapor and fluid tight seal. Where more than one array is present on a substrate, typically each array is surrounded or bounded by the sealing element(s) which provides individual seals or individual assay areas around each array such that multiple samples may be tested with multiple arrays without cross-contamination. The subject array assay devices usually also include at least one access port for the introduction and/or removal of fluids and/or gases from the array assay device.

The array assay devices may assume a variety of shapes ranging from simple to complex, with the only limitation that they be suitably shaped to receive or hold at least one array. In many embodiments, the array assay devices will assume a circular, square or rectangular shape, although other shapes are possible as well, such as irregular or complex shapes. For example, in those embodiments where at least one array is stably associated with a substrate that is a microscope slide, e.g., a 1" x 3" glass microscope slide as is known in the art, the array assay device may be similarly rectangularly shaped.

Similarly, the size of the array assay devices may vary depending on a variety of factors, including, but not limited to, the size of the array substrate and the like. Generally, the subject array assay devices will be sized to be easily transportable or moveable. In certain embodiments of the subject devices having a substantially rectangular shape, the length of such array assay devices typically range from about 10 mm to about 200 mm, usually from about 20 mm to about 100 mm, more usually from about 22 mm to about 80 mm, the width typically ranges from about 10 mm to about 100 mm, usually from about 20 mm to about 50 mm, more usually from about 22 mm to about 30 mm and the thickness typically ranges from about 2 mm to about 100 mm, usually from about 4 mm to about 50 mm, more usually from about 5 mm to about 20 mm. The volume of the space bound by the array assay device, i.e., the array assay device volume typically ranges from about 10 µl to about 5000 µl, usually from about 100 µl to about 1000 µl, and more usually from about 150 µl to about 600 µl. However, these dimensions are exemplary only and may vary as appropriate.

Furthermore, the array assay devices may be manufactured from a variety of materials, with the only limitation being that the such materials used to fabricate the subject devices will not substantially interfere with the assay reagents and will have minimal non specific binding characteristics, e.g., substantially chemically inert, thermally stable, etc. Specifically, the materials should be chemically and physically stable under conditions employed for the array assay. Examples of such materials may include, but are not limited to, plastics such as polytetrafluoroethylene, polypropylene, polystyrene, polycarbonate, PVC, and blends thereof, elastomers such as silicone rubber and the like, stainless steel and alloys thereof, siliceous materials, e.g., glasses, fused silica, ceramics and the like. As will be apparent to those of skill in the art, the subject devices or any component thereof may be manufactured to be re-useable or single use. That is, one or more components of the subject array assay devices may be reusable while other components may be single use. For example, the subject devices may include an array holder, which will be described in greater detail below, where the array holder may be single use or disposable while the array assay device, i.e., the bottom surface, receiving element and compression element, may be reusable or vice versa.

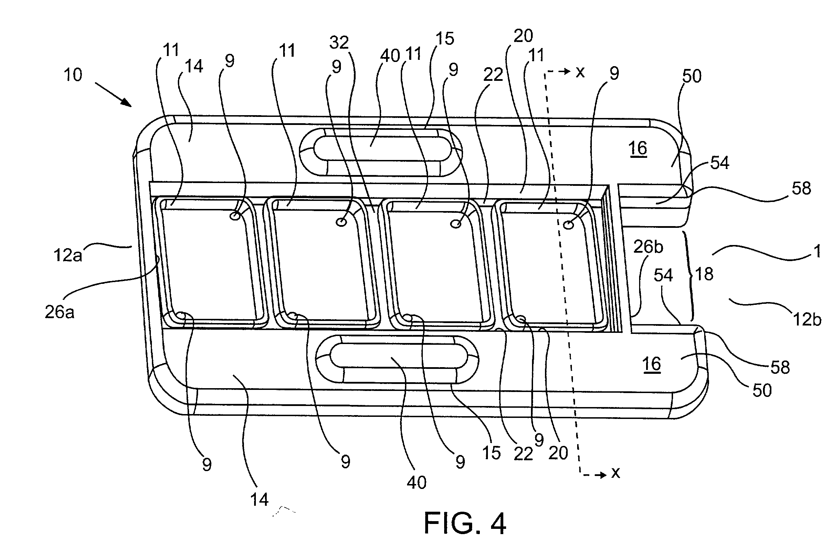

Turning again to the Figures, an array assay device 10 of the present invention will now be described in more detail. Figure 4 shows array assay device 10 having a body, which, in this particular embodiment, is rectangular in shape and includes a substrate receiving element 1 configured to receive a substrate having at least one array thereon. The substrate receiving element 1 includes two opposed side portions 14 with a channel 18 positioned therebetween, and extending in a direction between ends 12a, 12b of the body. As mentioned above, any suitable shape may be used. Channel 18 has a bottom surface 32 and has a closed leading end 26a and an open trailing end 26b.

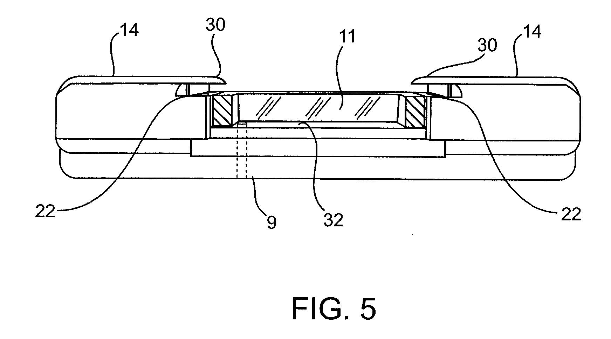

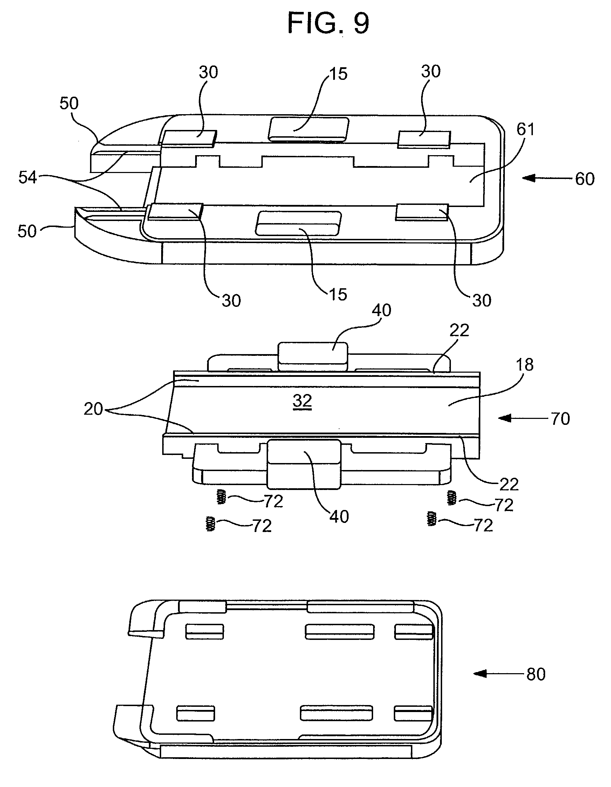

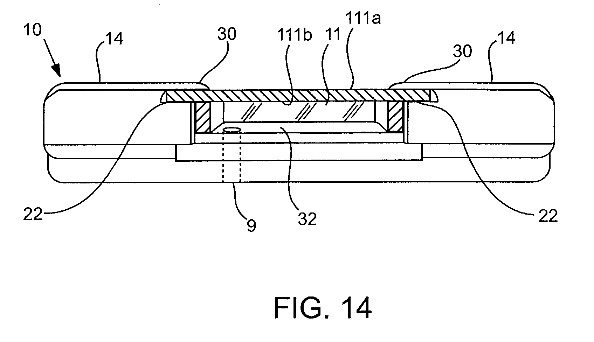

Substrate receiving element 1 further includes opposed sides 20 of channel 18, which have ledges 22 running the length of the sides 20. Ledges 22 and bottom surface 32 are further associated with a compression element 72 (shown in Figure 9), as will be described in greater detail below, and which, upon application of a force to the compression element, enables ledges 22 to move, along with bottom surface 32, to form a suitably sized space to receive a substrate having at least one array. The top surface of side portions 14 include extensions 30 that overlie or hang over ledges 22 (see for example Figures 5 and 14). As shown, extensions 30 extend over ledges 22 and are slightly spaced therefrom. Two spaced apart guides 50 extend from a trailing end of the device 10 adjacent respective sides of channel 18. Each guide 50 includes a trailing end 58 and a ledge 54 approximately aligned with a corresponding ledge 22 when the substrate receiving element 1 is in a closed position, i.e., when the compression element 72 urges the bottom surface 32 and ledges 18 in the direction of extensions 30, as will be described below. Figure 5 shows a cross section of device 4 taken along lines x-x.

As mentioned above, substrate receiving element 1, and more specifically bottom surface 32 and ledges 22, are operatively associated with a compression element 72 which applies a compression force or pressure to the bottom surface 32 and ledges 22 to urge the bottom surface 32 and ledges 22 in the direction of extensions 30, i.e., in the direction of or towards a substrate that is present in substrate receiving element 1 (positioned on ledges 22). Any suitable compression element 72 may be used, including, but not limited to, coiled or helical springs, leaf springs, molded-in springs of rear section 80 or of channel section 70 (see Figure 9), and the like. Figure 9 shows an exploded view of an exemplary embodiment of the subject invention having coiled springs 72 positioned so as to urge bottom surface 32 forwardly to a closed position (or out of the page).

Application of force to compression element 72 thus moves the substrate receiving element 1, i.e., the bottom surface 32 and ledges 22, rearwardly to an open position (or into the page as viewed in Figure 4) so as to provide a space between extensions 30 and ledges 22 for a substrate, i.e., so that a substrate may be positioned in substrate receiving element 1. More specifically, application of a force to the compression element 72 moves bottom surface 32 and ledges 22 rearwardly (into the page), as described above, to increase the distance between the ledges 22 and extensions 30. In such an open configuration, i.e., when a force is applied to the compression element 72 to move ledges 22 and bottom surface 32 rearwardly, the distance provided between the ledges 22 and extensions 30 is such that a substrate may be easily positioned therebetween i.e., the space provided is greater than the thickness of an array substrate to be mounted, where the provided distance may vary depending on the size of the array substrate used with the device. For example, for a substrate having a thickness of about 0.95 mm to about 1.05 mm, the provided distance between the ledges 22 and tabs 30 will typically be slightly greater than 0.95 mm to about 1.05 mm, i.e., the ledges 22 will be rearwardly moved (into the page) to provide a space for the array substrate.

To apply a force to compression element 72, and thus to move the substrate receiving element 1 to an open position, at least one control member in the form of a button 40, herein shown as two such buttons 40, is positioned and movable within an opening 15 in a front surface 16 of a corresponding side portion 14. Each control member 40 is connected to channel 18 (including ledges 22) such that applying a force and moving the control members 40 rearwardly (into the page, as viewed in Figure 4) causes the channel 18 to also move rearward, thereby moving ledges 22 and bottom surface 32 rearwardly. That is, pressing down on buttons 40 (as viewed in Figure 4) moves the substrate receiving element 1 from a closed position to an open position and channel 18 in a direction away from extensions 30. When a force is no longer applied to the compression element 72, the compression element 72 resiliently urges channel 18 forwardly so that the substrate receiving element 1 is in a closed position. That is, bottom surface 32 and ledges 22 are pushed forwardly in a direction towards extensions 30 when force is no longer applied to compression element 72.

When the compression element 72 is applying a compression force to the bottom surface 32, the bottom surface 32 is urged forwardly towards extensions 30, as described above. More specifically, the compression element 72 urges the bottom surface 32 in a direction towards an array substrate when present in substrate receiving element 1 so as to hold the bottom surface in a fixed position relative to the positioned array substrate by applying an urging force to the bottom surface. Typically, the fixed position is such that a distance ranges from about 1 mm to about 100 mm, usually from about 2 mm to about 50 mm and more usually from about 4 mm to about 5 mm exists between the bottom surface 32 and the substrate retained by the device.

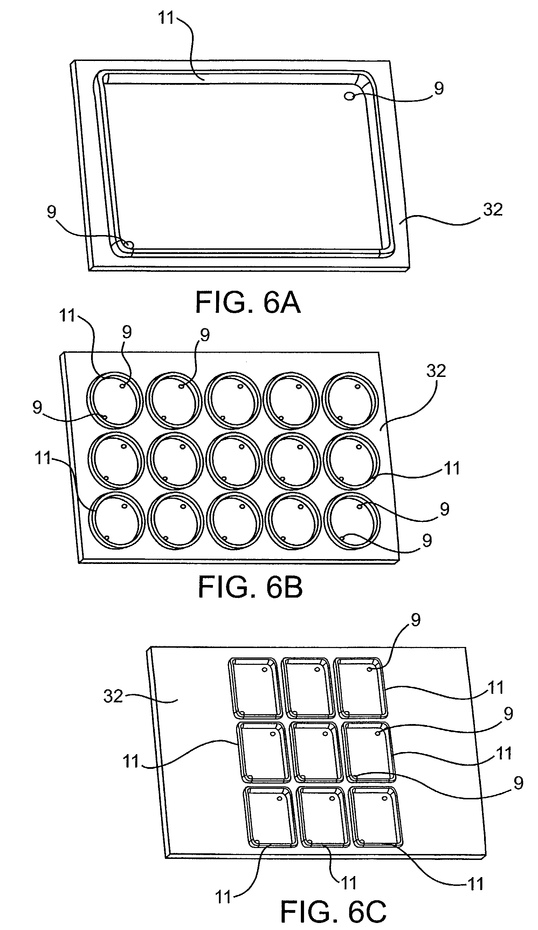

The subject array assay devices also includes one or more sealing elements 11 which forms a seal around the array(s) on the substrate to provide a sealed array assay area. By sealing element is meant any sealing device or structure that produces a seal between two surfaces, such as a gasket, a lip, ledge or ridge, material interface, viscous sealant, or the like and which does not substantially adversely interfere with the array assay such as by leaching, non-specific binding, or other physical or chemical degradation. Figures 6A-6C show a portion of the device of Figure 4 that includes the bottom surface 32. In this embodiment, sealing element 11 is associated with the bottom surface 32 and is configured to define a seal or boundary around each array on a mounted substrate when the bottom surface 32 is held in a fixed position relative to the substrate by compression element 72. That is, when the bottom surface 32 is held in a fixed position relative to an array substrate by compression element 72, the sealing element 11 is contacted with the substrate and forms a seal around an array on the substrate to produce an assay area around the array. The sealing element 11 may be configured or positioned in any suitable manner, depending on the number and configuration of arrays on the substrate. For example, Figure 6A shows an exemplary embodiment of one such configuration where the sealing element 11 is positioned around the perimeter of the bottom surface 32 to form one seal or assay area. Figures 6B and 6C show other exemplary configurations where the sealing element 11 may form a plurality of seals or individual assay areas, e.g., around respective arrays on a substrate when operatively positioned relative to the substrate and arrays. In certain embodiments of the subject devices, the sealing element 11 may be modified to include continuous ridges so that the pressure supplied by the urging of the bottom surface is higher at those locations and preferably causes them to compress. Alternatively, the sealing element 11 may be a separate component positioned between the bottom surface 32 and the substrate or may be associated, i.e., secured or attached, with the array substrate instead of the bottom surface 32 and a seal may be formed the same as if the sealing element 11 were on the bottom surface 32.

The volume of the assay areas, i.e., the assay volume, associated with each array may vary depending on the specific array substrate size, the number of arrays, the type of array assay performed, etc. In many embodiments of the subject devices, for example when employing a substrate having dimensions of about 1" x 3", the volume of the assay area ranges from about 10 µl to about 5000 µl. The subject devices may also include one or more fluid access ports 9 (see for example Figure 4) for the introduction and/or removal of fluids and/or gases from the subject devices and more specifically from the sealed assay areas formed by the array substrate, the bottom surface and the walls of the sealing element, as described above.

In those embodiments having more than one assay area, each assay area will usually have at least one respective access port 9 to enable testing of multiple samples with multiple arrays without cross-contamination, where each assay area may have two respective access ports- one for the introduction and another for removal of fluids and/or gases. Fluid and/or gases may be introduced into an assay area through an access port 9 using a pipette, syringe, etc. To minimize fluid loss through the ports 9, the access ports 9 may also include a closure means (not shown) such as duckbill valves, caps, check valves, self-sealing gaskets, and the like such that a port is resealable and in certain embodiment may be self-sealing or rather may be penetrable, e.g., by a pipette, syringe or the like, and then may automatically close. It will be appreciated that any number of access ports 9 may be used, herein shown as two access ports 9, but greater or fewer access ports 9 may be employed. For example, in those embodiments having a plurality of assay areas, each assay area may have one or more respective access ports associated with it, as mentioned above.

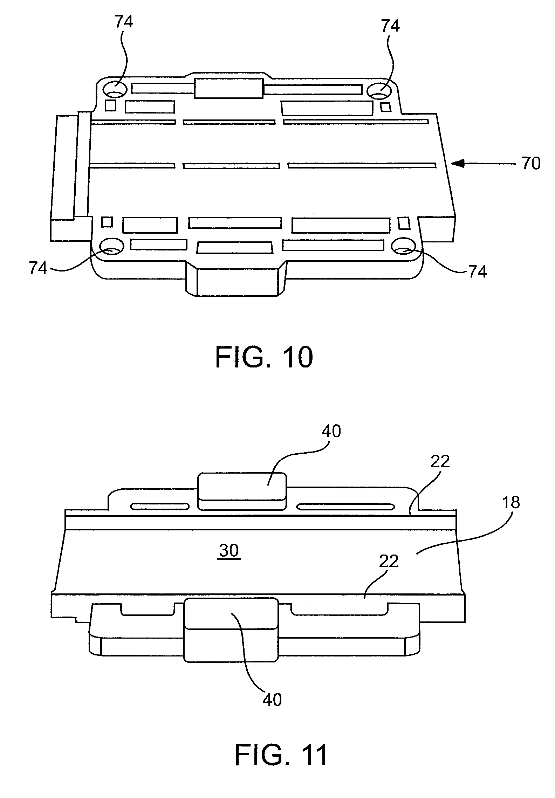

The array assay device 10 is usually made in two or three molded sections, as illustrated in Figure 9, shown here without the sealing element(s) present so that the invention may be better visualized. In those embodiments having two molded sections, front section 60 (shown here with extensions 30 configured as tabs) and rear section 80 would be formed or molded as one contiguous pieces A channel section 70 is interposed between a front section 60 and rear section 80. Rear and front views of channel section 70 are illustrated in more detail in Figure 10 and 11, respectively. Channel section 70 is mounted to be free floating between sections 60, 80, with buttons 40 retained and movable forwardly and rearwardly within openings 15. The compression element 72 (herein shown as four springs although more or less may be used as required or any other suitable compression element may be used) are retained in openings 74 in a rear side of channel section 70, as best seen in FIG. 10. As shown in Figure 9, section 60 has an opening 61 such that a mounted substrate 110 may provide a portion of the wall made absent by opening 61 of the device; however, as described above, section 60 may be a solid piece as well. For ease of manufacturing, sections 60 and 80 of the array assay device 10 are usually ultrasonically welded together. Alternatives include adhesive bonding, solvent welding, molded-in snap fit joints, molding or fabricating as a single element and the use of fasteners such as screws and the like. Springs 72 resiliently urge channel section 70 forward, and hence urge buttons 40, bottom surface 32 and ledges 22 forwardly, as described above.

### Array Holders

Also provided are array holders suitable for use with the subject array assay devices. More specifically, the subject array holders are used to retain the substrates which include one or more arrays. The array holders of the subject invention are configured to be inserted into the subject array assay devices, i.e., the array holders are removable from the array assay devices, and may also be configured to be compatible with array scanners or readers for interrogating or reading the array after an assay has been performed such as a hybridization assay or the like, e.g., array optical scanners such as the MICRO-ARRAY scanner available from Agilent Technologies, Inc. of Palo Alto, CA, where such a compatible scanner will typically have a suitable mounting means for receiving and releasably retaining the holder in a known position so that an array, retained by the array holder and mounted on a scanner, may be read.

The subject array holders serve multiple purposes such as substrate edge protection, compatibility with array scanners and the ability to grasp and manipulate an array without contacting the array itself, e.g., during a wash protocol, during transport, e.g., to an array reader, and the like. Furthermore, the array holders enable a wide range of substrate sizes to be used with the subject array assay devices. That is, a substrate shorter in length than a typical substrate such as a typical 1" by 3" microscope slide, may be first retained in the array holder which itself is about 1" by about 3", or is the size of a typical substrate or of a suitable size that is compatible with the array assay device. Thus, when a substrate having a length shorter than about 3" is retained by a holder, the shorter substrate may still be used with a subject array assay device. In certain embodiments, spacers may be added to the holder as well to accommodate the remaining volume/area remaining from the shorter length substrate to allow the sealing means to form an appropriate seal therewith and the volume within the formed assay area(s) to remain constant no matter the dimensions of the substrate.

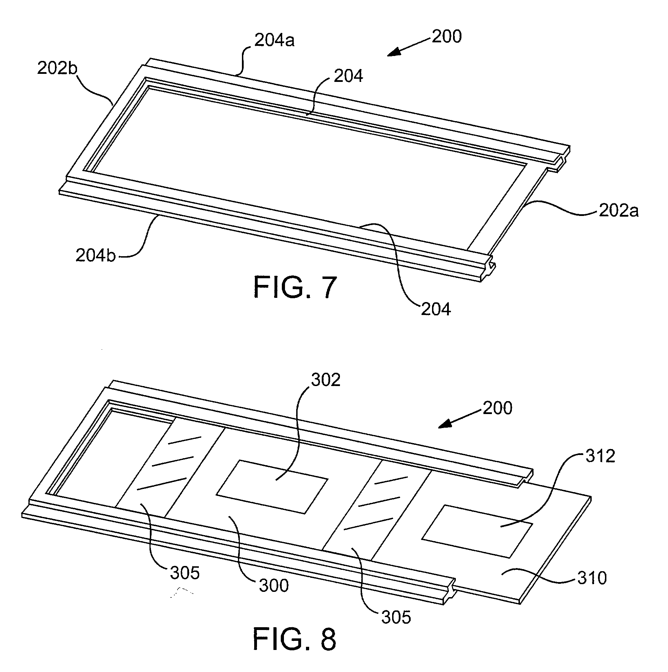

Figure 7 shows an exemplary embodiment of a subject array holder. Array holder 200 includes two opposed side portions 204a and 204b with a channel 206 positioned therebetween, and extending in a direction between open end 202a and closed end 202b. Opposed side portions 204a and 204b have ledges 204 running the lengths of side portions 204a and 204b which receive and retain a substrate, i.e. upon which a substrate rests. In use, a substrate is inserted into holder 200 via open end 202a. Figure 8 shows holder 200 having a substrate 300 retained therein and a substrate 310 partially inserted through open end 202a. As is shown, substrates 300 and 310 have lengths shorter than the length of the holder 200 and thus spacers 305 are used to take-up the remaining space.

The size and shape of an array holder may vary according to the size and shape of a substrate and corresponding array assay device. By way of example only and not limitation, in certain embodiments the array holder is substantially rectangular in shape and the length thereof typically ranges from about 10 mm to about 200 mm, usually from about 20 mm to about 100 mm and more usually from about 22 mm to about 80 mm, the width typically ranges from about 10 mm to about 100 mm, usually from about 20 mm to about 50 mm and more usually from about 22 mm to about 30 mm and the thickness typically ranges from about 1 mm to about 100 mm, usually from about 3 mm to about 50 mm and more usually from about 5 mm to about 20 mm.

Furthermore, the subject holders may be manufactured from a variety of materials, with the only limitation being that the such materials used to fabricate the subject holders will not substantially interfere with the assay reagents and will have minimal non specific binding characteristics, e.g., substantially chemically inert, thermally stable, etc. Specifically, the materials should be chemically and physically stable under conditions employed for array assay procedures. Examples of such materials may include, but are not limited to, plastics such as polytetrafluoroethylene, polypropylene, polystyrene, polycarbonate, PVC, and blends thereof, stainless steel and alloys thereof, siliceous materials, e.g., glasses, fused silica, ceramics and the like. In those embodiments where the array holder is also compatible and thus used with an array reader or scanner, the material used will be compatible with the reader as well For example, where the reader is an optical scanner, the material of the array holder will usually be opaque, such as an opaque plastic, e.g., black acrylonitrile-butadiene-styrene (ABS) plastic (although other material could be used as well).

### METHODS

As summarized above, methods are also provided for performing an array assay such as a hybridization assay or any other suitable analogous binding interaction assay. Generally, a sample suspected of including an analyte of interest, i.e., a target molecule, is contacted with an array mounted in a subject array assay device under conditions sufficient for the analyte target in the sample to bind to its respective binding pair member that is present on the array. Thus, if the analyte of interest is present in the sample, it binds to the array at the site of its complementary binding member and a complex is formed on the array surface. The presence of this binding complex on the array surface is then detected, e.g., through use of a signal production system, e.g., an isotopic or fluorescent label present on the analyte, etc., as described above. The presence of the analyte in the sample is then deduced from the detection of binding complexes on the substrate surface.

As mentioned above, the subject methods may be used in a variety of array based assays, where hybridization reactions will be used herein for exemplary purposes only, and is not intended to limit the scope of the claims. In hybridization assays, a sample of target analyte such as target nucleic acids is first prepared, where preparation may include labeling of the target nucleic acids with a label, e.g., with a member of signal producing system and the sample is then contacted with the array under hybridization conditions, whereby complexes are formed between target analytes such as nucleic acids that are complementary to probe sequences attached to the array surface. The presence of hybridized complexes is then detected. Specific hybridization assays of interest which may be practiced using the subject arrays include: gene discovery assays, differential gene expression analysis assays; nucleic acid sequencing assays, and the like. Patent applications describing methods of using arrays in various applications include: WO 95/21265; WO 96/31622; WO 97/10365; WO 97/27317; EP 373 203; and EP 785 280 and U.S. Patents Nos. 5,143,854; 5,288,644; 5,324,633; 5,432,049; 5,470,710; 5,492,806; 5,503,980; 5,510,270; 5,525,464; 5,547,839; 5,580,732; 5,661,028; 5,800,992.

In practising the preferred methods, the first step is to provide a subject array assay device, as described above. Once the provision of an array assay device is met, the array assay device is used to mount substrate 110 in a manner as will now be described with reference to Figures 12-14.

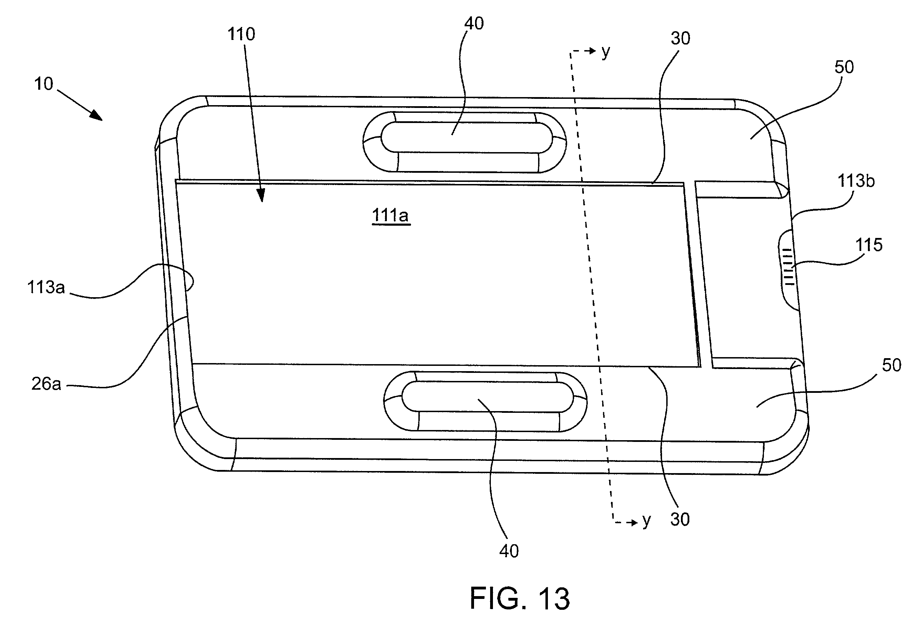

First, a user grips opposing portions of the front and rear surfaces of substrate 110, or an array holder 200 retaining the substrate 110, toward the trailing end 113b using their thumb and forefinger. The substrate receiving element 1 must then be moved to an open position to provide a space for the substrate between ledges 22 and extensions 30. Thus, a force is applied to compression element 72 to move bottom surface 32 and ledges 22 rearwardly to provide a space for the substrate 110. That is, buttons 40 are pressed rearward (into the page as viewed in Figure 12) to move bottom surface 32 with sealing element 11, if present on bottom surface 32, and ledges 22 rearwardly. Note that when in this configuration, i.e., in this open position, the distance between the ledges 22 and extensions 30 is greater than the thickness of substrate 110. Leading edge 113a of substrate 110 can then be positioned between guides 50 with opposite edges of substrate 110 (or leading edge of holder 200 if employed) resting on ledges 54 of guides 50, with rear surface 111b (and hence array 112) facing rearward or towards the bottom surface 32, and towards sealing element 11, while bar code 115 faces forward. Substrate 110 or holder 200 can then be slid in an endways direction 120 along ledges 54 of guides 50 and then along ledges 22 of channel 18, to position substrate 110 between the ledges 22 and tabs 30, until leading edge 113a of substrate 110 (or the leading edge of holder 200) abuts edge 26 of channel 18 at which point substrate 110 is in the mounted position (as shown in Figure 13).

Substrate 110 is retained in the mounted position by releasing the force applied to the compression element 72 by releasing buttons 40. Compression element 72 then urges bottom surface 32 and ledges 22 in a direction toward extensions 30, i.e., towards substrate 110, such that substrate 110 is retained between ledges 22 and extensions 30, i.e., substrate 110 is retained in the mounted position. As mentioned, compression element 72 also urges bottom surface 32 and sealing element(s) 11 in a direction towards the surface 111b of substrate 110 so that sealing element 11 contacts substrate 110 and forms a seal therewith. That is, compression element 72 applies a compression force to bottom surface 32 and urges or moves bottom surface 32 to a fixed position relative to mounted substrate 110. When in such a fixed position relative to mounted substrate 110, sealing element 11 forms a seal, e.g., a substantially vapor and fluid tight seal, around arrays 112 present on substrate 110 to form a sealed assay area around each array.

Accordingly, in the mounted position, rear surface 11 1 (and hence array(s) 112) is spaced apart from bottom surface 32 to provide an assay area of suitable volume between the substrate rear surface 111b and the bottom surface 32, as shown in Figure 14 which shows a cross section of array assay device 10 of Figure 13 taken along line y-y. As shown in the embodiment illustrated in Figure 14, each assay area includes two respective access ports 9, where a first access port may serve as a fluid introduction and/or fluid removal port and a second port may serve as a venting port. Also, when the substrate 110 is in the mounted position, trailing end 113b is positioned between guides 50. This helps protect trailing end 113b from breakage. Furthermore, the gripped portion will be between guides 50. The fact that guides 50 extend away from the remainder of the device 10 such that there are no surfaces or members between guides 50, allows a user to continue to maintain a hold on the gripped portions of the substrate 110 until it is in the mounted position at which point the gripped portions will also be between guides 50.

As mentioned above, the substrate having at least on array may be provided to the user pre-assembled or pre-packaged in the array assay device. For example, the array assay device may serve as the packaging for the substrate having at least one array during transport of the substrate and array(s) or the like from a remote manufacturer to the user, where an array assay is then performed in the same array assay device as that which is used as packaging for the substrate and at least one array.

Once one or more assay areas are formed around one or more arrays by the contacting of the sealing element 11 to the substrate 110 when the bottom surface is urged forwardly in a fixed position by compression element 72, the array is contacted with a fluid sample suspected of containing target analyte, e.g., target nucleic acids, that are complementary to probe sequences attached to the array surface. As will be apparent to those of skill in the art, the sample may be any suitable sample which includes a member of a specific binding pair. That is, the sample will be a sample capable of binding with a biopolymeric probe bound to the surface of the substrate. Typically, the sample includes the target analyte, often pre-amplified and labeled.

Thus, at some point prior to the detection step, described below, any target analyte present in the initial sample contacted with the array is labeled with a detectable label. Labeling can occur either prior to or following contact with the array. In other words, the analyte, e.g., nucleic acids, present in the fluid sample contacted with the array may be labeled prior to or after contact, e.g., hybridization, with the array. In some embodiments of the subject methods, the sample analytes e.g., nucleic acids, are directly labeled with a detectable label, wherein the label may be covalently or non-covalently attached to the nucleic acids of the sample. For example, the nucleic acids, including the target nucleotide sequence, may be labeled with biotin, exposed to hybridization conditions, wherein the labeled target nucleotide sequence binds to an avidin-label or an avidin-generating species. In an alternative embodiment, the target analyte such as the target nucleotide sequence is indirectly labeled with a detectable label, wherein the label may be covalently or non-covalently attached to the target nucleotide sequence. For example, the label may be non-covalently attached to a linker group, which in turn is (i) covalently attached to the target nucleotide sequence, or (ii) comprises a sequence, which is complementary to the target nucleotide sequence. In another example, the probes may be extended, after hybridization, using chain-extension technology or sandwich-assay technology to generate a detectable signal (see, e.g., U.S. Patent No. 5,200,314). Generally, such detectable labels include, but are not limited to, radioactive isotopes, fluorescers, chemiluminescers, enzymes, enzyme substrates, enzyme cofactors, enzyme inhibitors, dyes, metal ions, metal sols, ligands (e.g., biotin or haptens) and the like.

In one embodiment, the label is a fluorescent compound, i.e., capable of emitting radiation (visible or invisible) upon stimulation by radiation of a wavelength different from that of the emitted radiation, or through other manners of excitation, e.g. chemical or non-radiative energy transfer. The label may be a fluorescent dye. Usually, a target with a fluorescent label includes a fluorescent group covalently attached to a nucleic acid molecule capable of binding specifically to the complementary probe nucleotide sequence.

Accordingly, sample is introduced into the array assay device and more specifically to the assay area(s) formed around the one or more arrays, where it is retained due to the seal formed by the sealing element so that the array does not dry out. The sample is thus introduced into one or more assay areas via one or more access ports 9 either manually or automatically. Thus, each assay area may be accessible through at least one port 9 and sample may be introduced into respective assay areas through respective ports, e.g., introduced through one respective port and vented through another port. That is, the sample may be introduced using a pipette, syringe or any other suitable introduction means. In certain embodiments, one port provides a vent and sample is introduced through another port. Once introduced into an assay area, the sample is substantially confined to the assay area. In this regard, multiple samples may be tested with multiple arrays without cross-contamination, i.e., multiple samples may be introduced into different assay areas.

There is also provided a method for mixing fluid in an assay area, e.g., sample and/or wash fluid. In such as method, described in detail in U.S. Patent Application 6,258,593, the disclosure of which is incorporated by reference, a bubble is provided in the assay area by incomplete filling of the assay area or by addition of a gas to the assay area with the fluid, where the assay area may further include a surfactant to facilitate the mixing. Mixing is accomplished by moving the bubble within the assay area during the binding interaction to displace the fluid therein.

Accordingly, the sample is contacted with the array under stringent conditions to form binding complexes on the surface of the substrate by the interaction of the surface-bound probe molecule and the complementary target molecule in the sample. In the case of hybridization assays, the sample is contacted with the array under stringent hybridization conditions, whereby complexes are formed between target nucleic acids that are complementary to probe sequences attached to the array surface, i.e., duplex nucleic acids are formed on the surface of the substrate by the interaction of the probe nucleic acid and its complement target nucleic acid present in the sample. An example of stringent hybridization conditions is hybridization at 50°C or higher and 0.1 xSSC (15 mM sodium chloride/1.5 mM sodium citrate). Another example of stringent hybridization conditions is overnight incubation at 42°C in a solution: 50% formamide, 5 x SSC (150 mM NaCI, 15 mM trisodium citrate), 50 mM sodium phosphate (pH7.6), 5 x Denhardt's solution, 10% dextran sulfate, followed by washing the filters in 0.1 x SSC at about 65°C. Hybridization involving nucleic acids generally takes from about 30 minutes to about 24 hours, but may vary as required. Stringent hybridization conditions are hybridization conditions that are at least as stringent as the above representative conditions, where conditions are considered to be at least as stringent if they are at least about 80% as stringent, typically at least about 90% as stringent as the above specific stringent conditions. Other stringent hybridization conditions are known in the art and may also be employed, as appropriate.

Once the incubation step is complete, the array 112 is washed at least one time to remove any unbound and non-specifically bound sample from the substrate 110, generally at least two wash cycles are used. Washing agents used in array assays are known in the art and, of course, may vary depending on the particular binding pair used in the particular assay. For example, in those embodiments employing nucleic acid hybridization, washing agents of interest include, but are not limited to, salt solutions such as sodium, sodium phosphate and sodium, sodium chloride and the like as is known in the art, at different concentrations and may include some surfactant as well.

In washing the substrate 110 and more specifically an array 11 2 thereon, the substrate 110 may be removed from the array assay device or may be washed while still mounted in the device. To remove the substrate 110 from the mounted position, the user applies a force to compression element 72 by depressing the two buttons 40 to rearwardly move ledges 22 and bottom surface 32 with sealing element 11 away from the mounted substrate, and grips opposite portions of the front and back surfaces of substrate 110 at positions between guides 50. The gripped portions may then be used to slide the substrate 110 out of device 10 in an endways direction 140 opposite that of direction 120.

In those embodiments where the substrate 110 remains in the device, fluid may be removed through an access port and wash fluid may be introduced through the same or a different access port. If the substrate 110 is removed from the device for washing, the substrate 110 may remain in the array holder 200, if used, during washing so that the user may simply engage the array holder 200 during washing and not the substrate 110 itself, thereby minimizing contamination of the array.

Following the washing step, as described above, the array is then interrogated or read so that the presence of the binding complexes is then detected i.e., the label is detected using colorimetric, fluorimetric, chemiluminescent or bioluminescent means. If not already done, e.g., for the washing steps, the substrate, and array holder if used, is removed from the array assay device for reading by sliding in the direction opposite 120. In certain embodiments, the substrate 110 to be read is retained in a subject array holder 200, usually the same array holder 200 used for the assay. That is, an array 112 retained in an array holder 200 during an array assay procedure may be removed from the array assay device in the array holder 200 and then the array holder 200 with the array 112 still retained therein may be directly placed in a suitable array reader so that the retained array may be read.

Accordingly, the subject methods also include retaining a substrate 110 having at least one array 112 in an array holder 200, positioning the at least one array retained in the holder in an array assay device and performing an array assay with the at least one array in the holder. Following the completion of the array assay, the holder with the substrate 110 having at least one array 112 retained thereby is removed from the array assay device and directly placed, i.e., operatively mounted, into or on an array scanner or reader. In this manner, the at least one array may then be read or scanned by the array reader while the array is still held by the array holder. That is, the array holder may be used to handle a substrate 110 having at least one array both during the assay and during the scanning or reading of the array. The above described general methods for positioning and retaining a substrate having at least one array in an array holder, placing the retained substrate having at least one array in an array assay device, performing an array assay using the array assay device and retained substrate, removing the retained substrate having at least one array from the array assay device and mounting the retained substrate, i.e., the substrate held by the array holder, in or on an array scanner and scanning the at least one array while the array is retained by the array holder may be employed with the array assay devices described herein or any analogous array assay device. For example, the above described methods may be employed using the array assay devices described in copending U.S. application Serial No. 10/177,376, entitled "Array Assay Devices and Methods of Using the Same", to Shea et al.; copending U.S. application Serial No. 10/179,939, entitled "Array Assay Devices and Methods of Using the Same", to Shea, et al.; and copending U.S. application Serial No. 10/177,358, entitled "Array Assay Devices and Methods of Using the Same", to Shea, et al.; and in their counterpart European patent applications no. (RJ/N14209, N14220 and N14219) all filed the same day as the present application.

Reading of the at least one array 112 may be accomplished by illuminating the at least one array 112 and reading the location and intensity of resulting fluorescence at each feature of the array to obtain a result. For example, a scanner may be used for this purpose which is similar to the MICROARRAY scanner available from Agilent Technologies, Palo Alto, CA. Other suitable apparatus and methods for reading an array are described in U.S. Patent Application Serial Nos: Serial No. 20/087447 "Reading Dry Chemical Arrays Through The Substrate" by Dorsal et al., Serial No. 09/846125 "Reading Multi-Featured Arrays" by Dorsel et al.; and Serial No. 09/430214 "Interrogating Multi-Featured Arrays" by Dorsel et al.

However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in U.S. Patent Nos. 6,251,685; 6,221,583 and elsewhere). Results from the reading may be raw results (such as fluorescence intensity readings for each feature in one or more color channels) or may be processed results such as obtained by rejecting a reading for a feature which is below a predetermined threshold and/or forming conclusions based on the pattern read from the array 112 (such as whether or not a particular target sequence may have been present in the sample or whether or not a pattern indicates a particular condition of an organism from which the sample came). The results of the reading (whether further processed or not) may be forwarded (such as by communication) to a remote location if desired, and received there for further use (such as further processing).

The subject methods may also include pre-assembling or pre-packaging, i.e., pre-loading, a substrate having at least one array in an array assay device at a first site, e.g., a manufacturing facility or the like, and transporting the pre-packaged substrate to a second site for use in an array assay. By "second site" in this context is meant a site other than the site at which the array is pre-packaged in the array assay device. For example, a second site could be another site (e.g., another office, lab, etc.) in the same building, city, another location in a different city, another location in a different state, another location in a different country, etc. Usually, though not always, the first site and the second site are at least in different buildings, and may be at least one mile, ten miles, or at least one hundred miles apart. "Transporting" in this context refers to any means of getting the pre-packaged array(s) from one site to the next, i.e., physically moving or shipping the pre-packaged array(s) to a second site. Once the array assay device with the substrate having at least one array pre-assembled or pre-packaged therein is received by a user at the second site, an array assay is performed using the array assay device and pre-packaged array(s). Following completion of the array assay, the substrate having at least one array is removed from the array assay device, positioned on an array scanner or reader and the at least one array is scanned by the array reader to obtain a result, as described above. As mentioned above, the substrate may be positioned in an array holder prior to placement in an array assay device and the substrate may be retained in the array holder during the scanning or reading of the at least one array, i.e., the array holder may be operatively mounted on a scanner so that the array(s) may be scanned or read while retained in the array holder to obtain a result. The above described general methods of array use may be employed with the array assay devices described herein or any analogous array assay device, for example those described in copending U.S. application Serial No. 10/177,376, entitled "Array Assay Devices and Methods of Using the Same", to Shea et al.; copending U.S. application Serial No. 10/179,939, entitled "Array Assay Devices and Methods of Using the Same", to Shea, et al.; and copending U.S. application Serial No. 10/177,358, entitled "Array Assay Devices and Methods of Using the Same", to Shea, et al.; and in their counterpart European patent applications no. (RJ/N142 N14220 and N14219) all filed the same day as the present application.

In certain embodiments, the foregoing general assay methods do not include those assay methods described in U.S. application Serial No. 09/919073, filed on July 30, 2001.

As mentioned above, in certain embodiments, the subject methods include a step of transmitting data from at least one of the detecting and deriving steps, as described above, to a remote location. By "remote location" is meant a location other than the location at which the array is present and hybridization occur. For example, a remote location could be another location (e.g. office, lab, etc.) in the same city, another location in a different city, another location in a different state, another location in a different country, etc. As such, when one item is indicated as being "remote" from another, what is meant is that the two items are at least in different buildings, and may be at least one mile, ten miles, or at least one hundred miles apart. "Communicating" information means transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data. The data may be transmitted to the remote location for further evaluation and/or use. Any convenient telecommunications means may be employed for transmitting the data, e.g., facsimile, modem, internet, etc.

### KITS

Finally, kits which include the subject array assay devices are envisaged. The subject kits at least include one or more subject array assay devices. Typically, a plurality of subject array assay devices is included. The subject kits may also include one or more arrays, for example the subject kits may include one or more arrays and/or one or more subject array holders, where the subject arrays may be provided to a user already retained, i.e., pre-assembled, in subject holder and/or pre-packaged in an array assay device. The kits may further include one or more additional components necessary for carrying out an analyte detection assay, such as sample preparation reagents, buffers, labels, and the like. As such, the kits may include one or more containers such as vials or bottles, with each container containing a separate component for the assay, such as an array, and reagents for carrying out an array assay such as a nucleic acid hybridization assay or the like. Thus, the kit may include in packaged combination, an array, wherein the array comprises probes that selectively bind to the detectably labeled target analytes such as detectably labeled target nucleotide sequence, where such arrays may include background probes that do not selectively bind to the target nucleotide sequence and where such arrays may be provided retained in an array holder. The kit may also include a denaturation reagent for denaturing the analyte, buffers such as hybridization buffers, wash mediums, enzyme substrates, reagents for generating a labeled target sample such as a labeled target nucleic acid sample, negative and positive controls and written instructions for using the subject array assay devices and/or array holders and may also include instructions for carrying out the assay. The instructions may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g., CD-ROM, diskette.

It is evident from the above results and discussion that the above preferred embodiments provide devices and methods for performing array assays which are simple to use, have minimal components, do not require assembly and can be used with a multitude of different array formats. They can provide for a number of advantages, including the capability of testing multiple samples with multiple arrays without cross-contamination and fluid loss prevention.

The disclosures in United States patent application no. 10/179,938, from which this application claims priority, and in the abstract accompanying this application are incorporated herein by reference.

## Claims

**1.** An array assay device, including:
(a) a substrate receiving element for receiving a substrate having at least one array thereon, said substrate receiving element comprising a bottom surface; and
(b) a compression element for urging said bottom surface in a direction towards a substrate when present in said substrate receiving element so as to hold said bottom surface in a fixed position relative to said substrate.

**2.** A device according to claim 1, wherein said bottom surface includes a sealing element for producing a seal around at least one array positioned on a substrate when held in said fixed position.

**3.** A device according to claim 2, wherein said sealing element produces an assay volume of from about 10µl to about 1000µl.

**4.** A device according to any one of claims 1 to 3, including at least one access port.

**5.** A system for performing array assays, including:
(a) an array assay device according to any one of claims 1 to 4; and
(b) a substrate having at least one array.

**6.** A method of performing an array assay, including the steps of:
(a) providing an array assay device including:
(i) a substrate receiving element for receiving a substrate having at least one array thereon, said substrate receiving element comprising a bottom surface, and
(ii) a compression element for urging said bottom surface in a direction towards a substrate when present in said substrate receiving element so as to hold said bottom surface in a fixed position relative to said substrate;
(b) positioning a substrate comprising at least one array in said substrate receiving element;
(c) urging said bottom surface in a direction towards said positioned substrate using said compression element, whereby said bottom surface is fixed relative to said substrate present in said receiving element; and
(d) contacting a sample to said at least one array.

**8.** A method according to claim 6, wherein said device includes at least one port and said sample is introduced through said port.

**9.** A method of performing an array assay, including the steps of:
(a) receiving a pre-packaged substrate having at least one array in an array assay device according to any one of claims 1 to 4 from a remote site;
(b) performing an array assay using said received array assay device;
(c) removing said pre-packaged substrate from said array assay device; and
(d) reading said at least one array to obtain a result.

**10.** A method of performing an array assay and reading a result of said array assay, including the steps of:
(a) performing an array assay using an array assay device according to any one of claims 1 to 4 including a substrate having at least one array retained in an array holder;
(b) removing said retained substrate having at least one array from said array assay device; and
(c) mounting said retained substrate having at least one array on an array scanner so that said retained substrate having at least one array may be read by said scanner while retained in said array holder.

**11.** A method according to claim 10, including reading said mounted at least one array.
